# EUROPEAN PATENT APPLICATION

(11) **EP 4 502 855 A1**
(43) Date of publication of application: **05.02.2025**
(21) Application number: 24190553.8
(22) Date of filing: 24.07.2024
(51) Int. Cl.: G06F 30/23, B22F 10/80, B33Y 50/00, B29C 64/386, G06F 113/10, G06F 119/02, G06F 119/08, G06F 119/14, G06F 119/18

(54) **SYSTEMS AND METHODS FOR OPTIMIZING METAMATERIAL LATTICES TO REDUCE DISTORTIONS AND STRESS**

(30) Priority: 31.07.2023 US 202318228033
(71) Applicant: General Electric Company, Schenectady, NY 12345 (US)
(72) Inventor: MCCARTHY, Brian S., Schenectady, 12345 (US); GAMBONE, JR., Justin John, Schenectady, 12345 (US); ADCOCK, Thomas C., Schenectady, 12345 (US); ERNO, Daniel J., Schenectady, 12345 (US); IMMER, Christopher D., Schenectady, 12345 (US); VASIL, Christina, Schenectady, 12345 (US)
(74) Representative: Hafner & Kohl PartmbB

(57) **Abstract**

A computer program product comprising a non-transitory computer-readable medium storing instructions, that when executed by a computer processor (210), cause the computer processor (210) to perform obtain a model (102) defining a geometry of a component (103) for manufacturing using an additive manufacturing system (100), discretize the component (103) into a plurality of voxels (402), each voxel representing a volumetric portion of the component (103), identify voxels (402) of the plurality of voxels (402) having a value of stress greater than a threshold value, determine regions (404) of the component (103) contributing to the identified voxels (402) having the value of stress greater than the threshold value through a build process simulation configured to iteratively simulate modifications to voxels (402) of the component (103) so that the value of stress of the identified voxels (402) is reduced, modify the geometry of the regions (404) of the component (103), and store an updated model (102b) of the component (103) incorporating the modifications to the geometry.

## Description

### Technical Field

The present specification generally relates to systems and methods of optimizing metamaterial lattices implemented within an additively manufactured component to reduce distortions and stress of the component.

### Background

Additive manufacturing (AM) systems and processes are used to fabricate precision three-dimensional components from a digital model. Such components are fabricated using additive processes where successive layers of material are consolidated one on top of the other on a build plate in an additive manufacturing machine (AMM). Additive manufacturing systems include powder bed fusion, binder jet, direct energy deposition, material extrusion, material jetting, sheet lamination, and vat polymerization.

Some additive manufacturing systems involve the consolidation of a particulate to fabricate a component. Such techniques facilitate producing complex components from expensive materials at a reduced cost and with improved manufacturing efficiency. Additive manufacturing systems, such as Direct Metal Laser Melting (DMLM), Selective Laser Melting (SLM), Direct Metal Laser Sintering (DMLS), and LaserCUSING^{®} systems, fabricate components using a focused energy source, such as a laser device or an electron beam generator, a build platform, and a particulate, such as, without limitation, a powdered metal. (LaserCUSING is a registered trademark of Concept Laser GmbH of Lichtenfels, Germany.)

Additively manufactured components have build characteristics that are influenced by the design and formation of the components during the additive manufacturing process. Accordingly, the build characteristics may vary from desired values in different regions of the components due to variances during the design and formation of the component. For example, some components may include areas of high stress or deformations that could lead to undesirable anomalies in the component. In other embodiments, the build characteristics of the component inhibit the formation of a desired anomaly in a region of interest. In at least some known systems, models of the components are evaluated to locate areas having high stress or deformations. Based on the evaluated models, the build parameters of the entire component or the region of interest are modified to influence the build characteristics of the region of interest. However, altering the build parameters of the entire component or the region of interest may have an undesirable effect on the build characteristics (e.g., an increase in the stress or deformation of the region of interest).

### BRIEF DESCRIPTION OF THE DRAWINGS

The embodiments set forth in the drawings are illustrative and exemplary in nature and are not intended to limit the disclosure. The following detailed description of the illustrative embodiments can be understood when read in conjunction with the following drawings, where like structure is indicated with like reference numerals and in which:
FIG. 1 is a schematic view of an exemplary additive manufacturing system, according to one or more embodiments shown and described herein;
FIG. 2 schematically depicts an illustrative computing device operating as the control system, according to one or more embodiments shown and described herein;
FIG. 3A depicts an illustrative lattice structure comprising a classic hexagonal honeycomb lattice, according to one or more embodiments shown and described herein;
FIG. 3B depicts an illustrative lattice structure comprising an auxetic hexagonal honeycomb lattice, according to one or more embodiments shown and described herein;
FIG. 3C depicts an illustrative lattice structure comprising a chevron honeycomb lattice, according to one or more embodiments shown and described herein;
FIG. 3D depicts an illustrative lattice structure comprising a two-dimensional anti-tetrachiral system, according to one or more embodiments shown and described herein;
FIG. 4A depicts an illustrative model of a component for manufacturing with an additive manufacturing machine, according to one or more embodiments shown and described herein;
FIG. 4B depicts a two-dimensional representation of the 3D model and a visualization of the stress within in the component, according to one or more embodiments shown and described herein;
FIG. 4C depicts an illustrative three-dimensional visualization of the stress determined within the component depicted in FIGS. 4A-4B, according to one or more embodiments shown and described herein;
FIG. 5 depicts a schematic of a "recoater strike" situation arising from a protrusion of the component due to inherent strain associated with the component as it is manufactured, according to one or more embodiments shown and described herein; and
FIG. 6 depicts a flow diagram of an illustrative method for improving the inherent strain associated with an additive manufactured component using lattice structures, according to one or more embodiments shown and described herein.

### DETAILED DESCRIPTION

References will now be made in detail to the embodiments of the disclosure, examples of which are illustrated in the accompanying drawings. Whenever possible, like reference numbers will be used to refer to like components or parts.

Embodiments of the present disclosure provide systems, methods, and computer-program products for improving the inherent strain associated with an additive manufactured component using lattice structures. Inherent strain of an additive manufactured component generally arises from thermo-mechanical processes. Inherent strains can have a negative impact on the final manufactured component. When inherent stains are too large they can manifest as changes in the physical geometry of the component. For example, surface distortions, geometric deformations, cracks, build lines and the like can result from uncontrolled stress. Additionally, in some cases, stress beyond a threshold value may cause a portion of a part in the process of being built to deform such that a component of the additive manufacturing machine contacts the deformation and causes damage thereto.

The inherent strain of a component may vary depending on the material of the component and/or the build strategy. For example, manufacture of a component composed of CoCr using a direct metal laser melting (DMLM) build process having a particular power, speed, spot size, hatch spacing, and layer thickness will have a first set of inherent strain values associated with the component that may differ from a second set of inherent strain values associated with the same component design where the material or a parameter of the build process is changed. In the present disclosure, inherent strain is defined as a property of the lattice in addition to the material and build strategy parameters. A lattice as discussed herein refers to a three-dimensional ("3D") structure with an internal composition of interlocking nodes spaced apart by beams, forming cells. The cells are organized in a repeating pattern such that when connected together form a 3D shape. Moreover, as noted above, inherent strain of an additive manufactured component can arise from thermo-mechanical processes. Moreover, stress refers to the force applied to a material, divided by the material's cross-sectional area. Applied forces can arise from the weight and shape of materials disposed on each other during a build process. Strain refers to the deformation or displacement of material that results from an applied stress. In general, a particulate material is selectively energized by an energy source causing the particulate material to change temperature and consolidate in a predefined manner, forming a layer of a component. The process is repeated by adding new layers of particulate material on top of the previous layer and subsequently introducing energy from the energy source. Depending on the geometry of the layer, composition of the material, and other factors (for example, a binder material or gas is present), the consolidated material goes through expansion and contraction, generating various levels of stress through the component as it is manufactured. When a region of the part includes a stress that cannot be contained by the geometry of the component, undesirable effects manifest themselves in the physical geometry of the component.

Embodiments described herein provide systems, methods, and computer-program products for optimizing the inherent strain associated with an additively manufactured component by introducing and/or optimizing lattice structures within the additively manufactured component. In some embodiments, support structures, which are temporary structures implemented during the additive manufacturing processes to provide support to portions of a component during the additive manufacturing process, may include lattice structures that can be modified to change the inherent strain of the component.

Various embodiments of the systems, methods, and computer program products implementing the methods are shown and described herein.

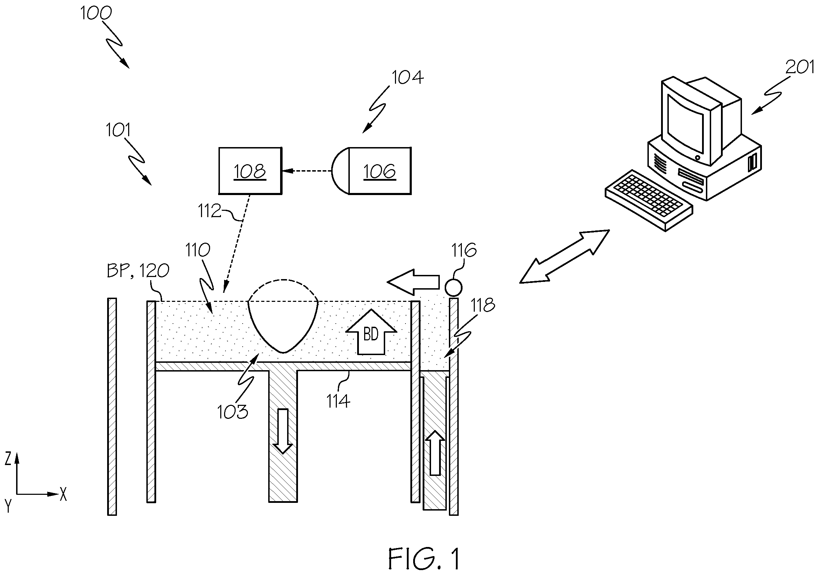

Turning now to the drawings, where like numbers refer to like structures, and particularly to FIG. 1 that depicts a schematic view of an exemplary additive manufacturing machine 101 and system 100. Additive manufacturing machines (AMMs) 101 or apparatuses (AMAs) include rapid-prototyping, rapid manufacturing device, or additive manufacturing device such as a binder jet additive manufacturing, fused deposition modeling (FDM), stereolithography (SLA), digital light processing (DLP), selective laser sintering (SLS), selective laser melting (SLM), laminated object manufacturing (LOM), electron beam melting (EBM), and/or the like. In general, AMMs include a build plane (BP, 120, FIG. 1) where a layer of working material is deposited and an energy sources such as a laser, heat source, UV light, or other type of directed energy source is applied to the working material to cause bonding or transformation of the working material into a rigid material. The process is repeated by adding layer upon layer of working material onto the previous layer in a build direction (+Z-axis, FIG. 1) that is typically perpendicular to the build plane BP. However, this is merely a general example of an additive manufacturing process as there are many different combinations of working materials, binders, and/or energy sources that are used to additively manufacture a component.

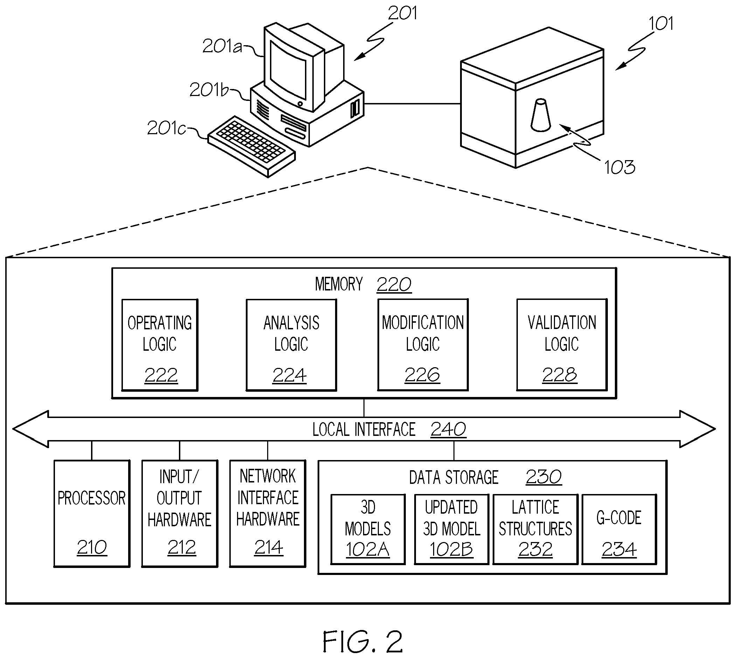

In the exemplary embodiment, the additive manufacturing system 100 includes an AMM 101 and a control system 201. The AMM 101 includes consolidation device 104 having a laser device 106 and a scanning device 108. The AMM 101 is configured for fabricating a component 103 from a computerized 3D model (e.g., a 3D model 102a or an updated 3D model 102b, FIG. 2, and generally referred to herein as a 3D model 102) using a layer-by-layer manufacturing process by sintering or melting a particulate 110 using an energy beam 112 generated by a source such as a laser device 106. For example, in some embodiments, the AMM 101 is used for direct metal laser sintering (DMLS) or direct metal laser melting (DMLM). The laser device 106 provides a high-intensity heat source configured to generate a melt pool in a bed of particulate 110 using an energy beam 112. Alternatively, a consolidation device 104 may include any component that facilitates consolidation of a material using any of the processes and systems described herein.

In the exemplary embodiment, the AMM 101 further includes a build platform 114, a recoater arm 116, and a reservoir 118. During operation of additive manufacturing machine 101, particulate 110 is supplied by the reservoir 118 and spread evenly over the build platform 114 using the recoater arm 116. The recoater arm 116 is configured to maintain the particulate 110 at a particulate level 120 and remove excess particulate material extending above a particulate level 120 (e.g., also referred to herein as the build plane, BP) to a particulate container. The energy beam 112 consolidates the particulate 110 to form a cross-sectional layer of the component 103. After selective consolidation of the layer of particulate 110, the build platform 114 is lowered and another layer of particulate 110 is spread over the build platform 114 and the component 103, followed by successive consolidation of the layer of particulate 110 by the laser device 106 (i.e., an energy device). The process is repeated until the component 103 is completely built up from the consolidated portion of particulate 110.

The system 100 may be deployed over a network. The network may include a wide area network, such as the internet, a local area network (LAN), a mobile communications network, a public service telephone network (PSTN) and/or other network. The network may be configured to electronically and/or communicatively connect the AMM 101, the control system 201, and optionally other components or resources.

The control system 201 may be a computing device. The computing device may include a display device 201a, a processing unit 201b and an input device 201c, each of which may be communicatively coupled together and/or to the network. The control system 201 may be a server, a personal computer, a laptop, a tablet, a smartphone, a handheld device, or the like. The control system 201 may be used by a user of the system 100 to provide information to the system 100. For example, the user may generate a 3D model 102 (e.g., 102a or 102b, FIG. 2) of a component 103 using CAD software or upload a 3D model 102 of a component 103 for manufacture, input or update AMM attributes, attributes of the working material, and/or the like with the control system 201. The control system 201 may utilize a local application or a web application to access the AMM 101. The control system 201 may host and provide an interactive interface to the user through the display device 201a and/or input device 201c such that a user may query, select, and/or input information that may be relayed to the AMM 101. The system 100 may also include one or more data servers having one or more databases from which information may be queried, extracted, updated, and/or utilized by the control system 201 and/or the AMM 101.

In some embodiments, the AMM 101 operates based on a set of additive manufacturing machine control commands that are typically generated by a slicing tool. Slicing tools receive a 3D model 102 of a component 103, for example, as a STL, file and apply a slicing algorithm that partitions the 3D model 102 of the component 103 into a plurality of build layers having a predefined thickness depending on the geometries of the component 103 and the AMM 101 that will manufacture the component 103. The set of additive manufacturing machine control commands may be embodied as a g-code file that defines a series of commands and associated values for the various components of the AMM 101 to operate and manufacture the component 103.

Referring now to FIG. 2, additional aspects and functionality of the control system 201 will be described. The control system 201 is depicted as a computing device. The computing device includes a processor 210, input/output hardware 212, network interface hardware 214, a memory module 220, and a data storage component 230. The memory module 220 may be machine readable memory (which may also be referred to as a non-transitory processor readable memory). The memory module 220 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. A computer program product may be embodied by the memory module 220 such that, when executed by the processor 210, cause the processor 210 to perform one or more methods described in more detail herein.

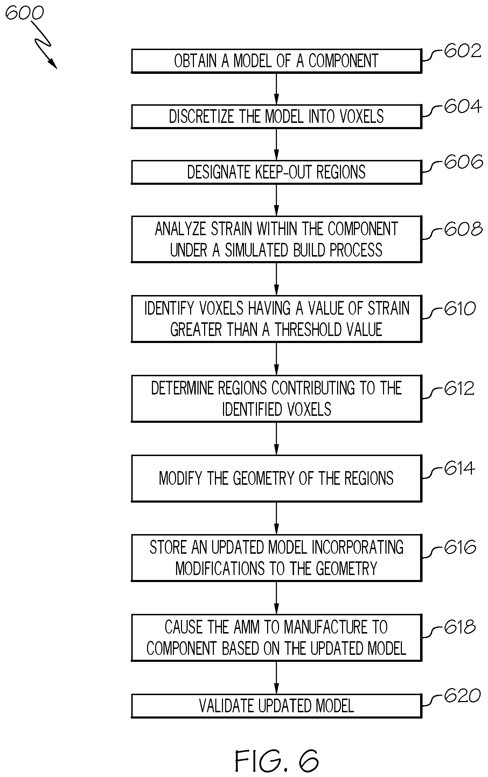

For example, the memory module 220 may be configured to store operating logic 222, analysis logic 224, modification logic 226, and validation logic 228, each of which define logic enabling one or more processes depicted and described with reference to flow diagram 600 depicted in FIG. 6. Furthermore, the logic elements 222, 224, 226, and 228 may be embodied as a computer program, firmware, or hardware, as an example. A local interface 240 is also included in FIG. 2 and may be implemented as a bus or other interface to facilitate communication among the components of the control system 201. In some embodiments, aspects of the analysis logic 224, modification logic 226, and the validation logic 228 may include features of finite element analysis for analyzing the stress within the component during a build and once the component is built. The aforementioned logic elements 222, 224, 226, and 228 will be described in more detail herein.

The processor 210 is any processing component(s) configured to receive and execute programming instructions (such as from the memory module 220 and/or the data storage component 230). The instructions may be in the form of a machine-readable instruction set stored in the memory module 220 and/or the data storage component 230. The input/output hardware 212 may include a monitor, keyboard, mouse, printer, camera, microphone, speaker, and/or other device for receiving, sending, and/or presenting data. The network interface hardware 214 may include any wired or wireless networking hardware, such as a modem, LAN port, Wi-Fi card, WiMax card, mobile communications hardware, and/or other hardware for communicating with other networks and/or devices.

The data storage component 230 may reside local to or remote from the computing device of the control system 201 and may be configured to store one or more pieces of data for access by the computing device and/or other components of the control system 201. As illustrated in FIG. 2, the data storage component 230 may store a 3D model 102a defining nominal geometry of a component 103 for manufacture, an updated 3D model 102b defining geometry that includes lattice structures implemented by one or more of the methods described herein for manufacture of the component 103 using the AMM 101, a library of lattice structures 232, and/or a set of additive manufacturing machine control commands 234 for building the component 103 with the AMM 101. The library of lattice structures 232 includes a plurality of models of lattice structures and corresponding parameters which may be adjusted by the control system 201 to implement and modify the inherent strain associated with a volumetric portion of the 3D model 102 of the component.

The library of lattice structures 232 may have predefined strain values, thermal properties, mechanical properties and the like which may be predetermined through experimentation, simulations, such as high-fidelity simulations, and/or manufacturing trials. The library of lattice structures 232 enables the modification logic 226 to readily select and implement a lattice geometry in a 3D model of a component to modify (e.g., increase or decrease) the value of the inherent strain associated with a component in areas where stresses above a threshold value are located and areas contributing to the area of high stress within the component. In embodiments, modifications of inherent strain may be made along specific planes or directions, for example, along the X-axis, Y-axis, Z-axis, an X-Y plane, Y-Z plane, X-Z plane (or 2D tensor), or along some arbitrary angle. As used herein, a "lattice structure" refers to a three-dimensional arrangement of interlaced structures or patterns defining a geometry having a void volume (i.e., not a bulk structure). Lattice structures are generally defined by a lattice topology, which includes a cell shape, cell size, percentage of volume fraction (e.g., void volume), strut geometry, and/or contour shape. In embodiments, the lattice structures may be metamaterial lattices defining geometries that have engineered properties that enable the lattice to expand or contract under a particular set of conditions, such as when heated and cooled. For example, some lattice structures are configured to expand as they cool as opposed to contract. Accordingly, the lattice structure may exert a force on adjacent material providing additional support and/or spreading an inherent strain across a larger volume of the component.

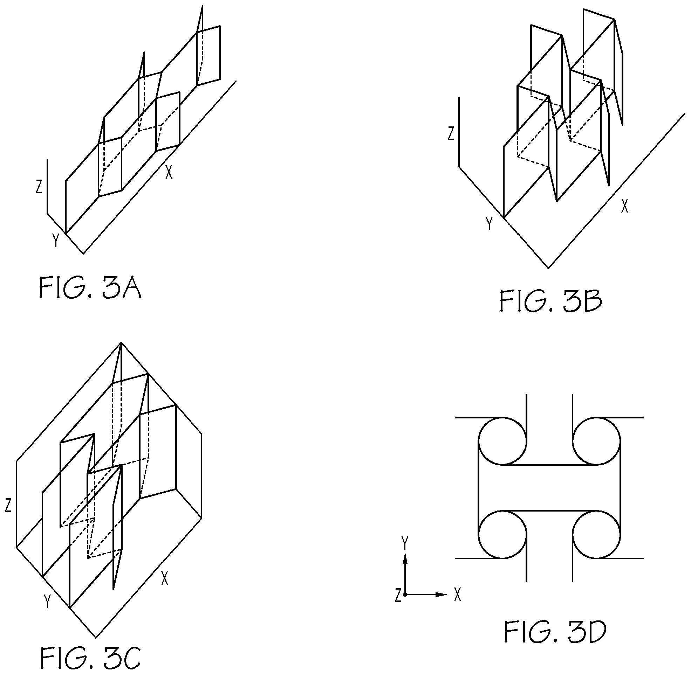

Some example lattice structures are depicted in FIGS. 3A-3D. FIG. 3A depicts an illustration of a classic hexagonal honeycomb lattice. FIG. 3B depicts an illustration of an auxetic hexagonal honeycomb lattice. FIG. 3C depicts an illustration of a chevron honeycomb lattice. FIG. 3D depicts an illustration of a two-dimensional anti-tetrachiral system, which is an example of an isotropic negative thermal expansion metamaterial, for example as described by Lingling Wu et al., "Isotropic Negative Thermal Expansion Metamaterials", ACS Appl. Mater. Interfaces 2016, 8, 27, 17721-17727, 2016, the contents of which are incorporated by reference herein. It is understood that the lattice structures depicted herein are merely illustrative examples and that other geometries known or to be developed may be implemented and modified by the systems and methods described herein.

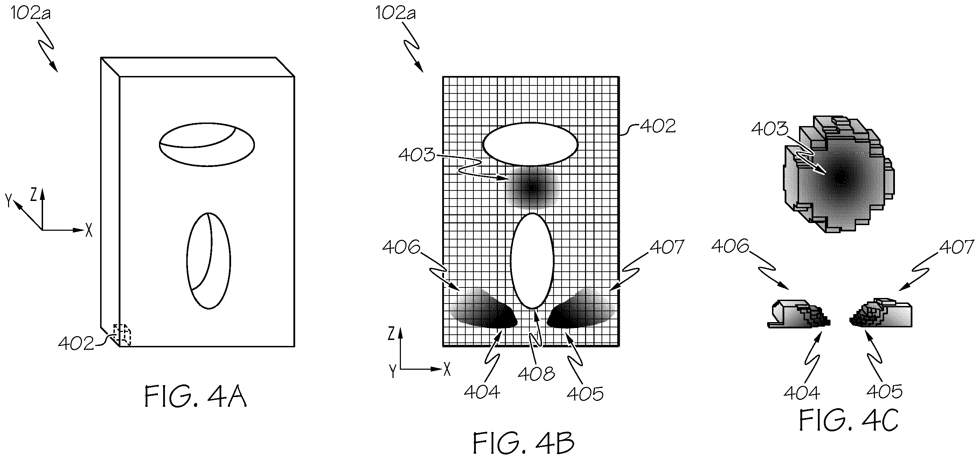

Referring now to FIGS. 4A-4C, illustrative embodiments of a component, elements of the component, and an illustrative visualization of the stress analysis are depicted and described to provide context and understanding as to how a model of a component is modified to reduce stress therein by the systems, methods, and computer-program products described herein and more specifically with reference to FIG. 6.

FIG. 4A depicts an illustrative model 102a of a component 103 for manufacturing with an additive manufacturing machine. As described herein, optimization of the model to control inherent strain associated with the manufactured component includes discretizing the model 102a into a plurality of voxels 402. A "voxel" defines a 3-dimensional volumetric portion of a 3D model 102a or component 103. The voxel represents a value on a grid in three-dimensional space. FIG. 4A depicts a single voxel defining a lower left volumetric portion of the 3D model 102a. In embodiments, the process of discretizing the geometry of the component into a plurality of voxels includes defining voxels for the entire 3D model 102a. Turning to FIG. 4B, a two-dimensional representation of the 3D model 102a along the X-Z plane is depicted. The two-dimensional representation of the 3D model 102a includes an illustration of a plurality of voxels 402 defined for the entire 3D model 102a. Additionally, a visualization of values of stress determined through analysis of the 3D model 102a under a simulated build process executed by the additive manufacturing system is shown. For example, darkened regions 403, 404, and 405 indicate regions having relatively high value of stress. Conversely, relatively lower values of stress are indicated, for example, by regions 406 and 407. As depicted, one or more voxels 402 correspond to the regions of stress determined by the analysis. The volumetric regions defined by voxels corresponding to regions (e.g., 403, 404, 405) having a value of stress greater than a threshold value are determined within the 3D model 102a and identified and selected for modification with a lattice structure to modify the value of inherent strain therein.

In some embodiments, the stress determined with the 3D model 102a may cause a component to crack, distort, deform, or otherwise include a surface protrusion of deformation (e.g., including the manifestation of a build line). For example, the regions of high stress indicated by regions 404 and 405 may be a result of compression stresses within the component formed from contraction of consolidated material as it cools, thereby causing a crack 408 to form along the Y-axis of the component 103 when manufactured. To reduce the contraction of the consolidated material, the systems and methods described herein replace the bulk material with a lattice structure or modify an existing lattice structure residing within the volumetric portions corresponding to the identified voxels. As a further illustrative example, FIG. 4C depicts an illustration of the plurality of voxels corresponding to the regions of high stress, i.e., stress greater than a threshold value, determined by the system and methods described herein. As depicted in FIG. 4C, the three-dimensional nature of the stress within the component is appreciated.

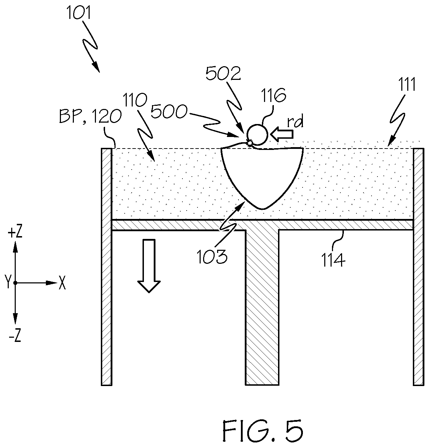

Before describing the method of optimizing the 3D model to modify the value of stress within a component being additively manufactured, another complication resulting from a deformation of a component being built due to high values of stress will be briefly discussed. Referring to FIG. 5, an illustrative AMM 101 is depicted manufacturing a component 103. More specifically, the recoater arm 116 is in the process of depositing a new layer 111 of particulate on top of the consolidated component 103 and particulate 110 material supported on the build platform 114. In a process just before the recoater arm 116 advances across (e.g., as indicted by arrow rd) the build plane BP (e.g., 120), the build platform advances down (-Z direction) such that a new layer 111 of particulate may be deposited on the build plane BP. However, in some instances, as a component 103 cools from being consolidated by the energy sources, the uncontrolled stresses within the component 103 cause a protrusion 500 to form, which does not sufficiently lower to or below the build plane BP. In this situation, for example, as depicted in FIG. 5, the recoater arm 116 is unable to clear the protrusion and strikes the component 103. The strike 502 can cause damage to the component 103 or to the recoater arm 116, and/or misalign the component on the build platform 114 causing an error in the continued manufacture of the component 103. The systems and methods for improving the stress within an additive manufactured component using lattice structures are further capable of reducing or preventing the presence of a protrusion 500 of the component 103 above the build plane BP during the manufacturing process.

Referring now to FIG. 6, a flow diagram 600 of an illustrative method for improving the stress within an additive manufactured component using lattice structures is depicted and described herein. Blocks corresponding to processes of the method depicted in flow diagram 600 may be executed in an order different than the order depicted and described herein. Additionally, some process blocks may be omitted such that the only a portion of the processes described herein are executed.

The illustrated method is implemented by a computing device of the control system 201 and references are made to elements depicted and described in FIGS. 1-5 herein. However, the processes described herein may be implemented by other devices or may be constructed as a computer-readable instructions set stored in a non-transitory computer-readable medium as a computer program product for execution by a computing device.

At block 602, the computing device obtains a 3D model 102a defining a geometry of a component. The model may be CAD model. CAD models may define attributes of the component 103 for additive manufacturing, such as a defined geometry, material, design tolerances, powder sizes distribution, binder type and amounts per layer, sintering profile, expansion factors, and the like. In addition to external geometries, the CAD model can also define internal structures such as whether a particular volume of the component comprises a bulk structure or a lattice structure.

At block 604, the computing device executes a process that discretizes the 3D model 102a into a plurality of voxels 402. The voxels 402 may be uniform in shape and size across the volume of the 3D model 102a or may vary in size and/or shape. Additionally, the process of discretizing the 3D model 102a into a plurality of voxels 402 associates a volumetric portion of the component 103 with the voxel representation.

In some embodiments, a user may select and identify regions of the 3D model that cannot be adjusted by the optimization process. For example, the user may, through an input device 201c and a display device 201a select and designate portions of the 3D model to keep-out of the optimization process. One reason a region might be defined as a keep-out region may be because the portion includes a complex geometry or contributes to important structural features of the manufactured component 103. The computing device, at block 606, designates at least one voxel of the plurality of voxels as a voxel that cannot be modified. The designation may set a flag associated with the voxel so that the computing device cannot make any changes to the voxel during subsequent processing operations.

At block 608, the computing device proceeds with executing analysis logic 224. The analysis logic is configured to analyze the stress within the component under a simulated build process executed by the additive manufacturing system 100 to determine a value of stress for each of the plurality of voxels. Analysis of the component under a simulated build process evaluates the stress within the component layer-by-layer as the component is built. In embodiments, the analysis may be performed by simulating the build process of the component using an additive manufacturing machine simulator system. In embodiments, strain may be provided to the component during the simulated build process to determine areas of stress within the component. Simulating the component as it is being built using the additive manufacturing system 100 enables the computing device to estimate the thermal and mechanical changes of the component as it is built, for example, in response to heating by energy source and the effects of consolidation and additional layers being built on top as it cures.

In some embodiments, the analysis process executed at block 608 includes determining the type of stress causing the strain associated with the component. Types of stress may include compression, tension, and shear. Determining the type of stress causing the strain can further inform the process for selecting and optimizing the lattice structure for modifying the value of the strain associated with the component. For example, if the strain associated with the component is the result of a compression type of stress in a particular plane (e.g., X-Y plane), the lattice structure that is implemented in the component may include one that can absorb or respond to compression types of stress better than bulk structures. Conversely, a tension type of stress causing strain associated with the component may necessitate a different lattice structure than one for addressing the compression type of stress. In embodiments, the library of lattice structures 232 may include a characterization category as to which type of stress the lattice structure can address. The characterizations may be determined based on experimentation and/or simulations, such as a finite element analysis of the lattice structure. Accordingly, once the type of stress is determined, as discussed in more detail herein, the modification process (e.g., at block 614), when the geometry of the voxel corresponds to a bulk structure, selects a first lattice structure to replace the bulk structure based on the type of stress causing the strain, and when the geometry of the voxel corresponds to a lattice structure, selects a parameter of the lattice structure to adjust based on the type of stress causing the strain.

In some embodiments, the analysis process at block 608 may be configured to detect and address a situation where a recoater arm 116 may strike a protrusion of the component above the build plane 120. For example, the process at block 608 may include determining a presence of a distortion in a layer of the component during the simulated build process resulting from the stress within the component. The presence of the distortion may include a situation where a protrusion of the component exists above a build plane. For example, if a protrusion extends beyond a thickness of the recoating layer, then the computing device may determine there is a high likelihood of the recoater arm 116 striking the protrusion as the recoater arm 116 traverses the build plane 120, depositing a new particulate layer. In response to detecting the presence of a protrusion above the build plane 120, the computing device identifies the one or more voxels contributing to the protrusion of the component. Subsequently, a modification according to the process described with respect to block 614 may be executed on the identified voxels. That is, the lattice structure implemented in the volumetric portions corresponding to the identified voxels reduces the size of the protrusion or precludes formation of the protrusion during the build process.

At block 610, the computing device processes the determined values of stress computed by the analysis process, at block 608, and identifies one or more voxels of the plurality of voxels where the value of stress is greater than a threshold value. The threshold value may be predetermined and specified in a configuration file corresponding to the 3D model 102a. In some embodiments, the threshold value may be the same for every voxel defining the component. However, in some embodiments, a different threshold value may be defined for discrete regions of the component. Accordingly, for example but without limitation, through a finite element analysis or experimentation, it can be determined that specific geometries of a component may be capable of different stress values without resulting in deformations, cracking, distortions, surface imperfections such as build lines, and/or other types of defects.

The computing device continues at block 612 with determining one or more regions of the component contributing to the identified one or more voxels having the value of stress greater than the threshold value through a build process simulation configured to iteratively simulate modifications to voxels of the component so that the stress of the identified one or more voxels is reduced. The one or more regions may include one or more of the identified one or more voxels and/or regions defines by voxels adjacent the identified one or more voxels and/or other voxels of component that contribute to the stress of the identified one or more voxels. The aforementioned determination includes a second simulated build process, for example, executing logic such as analysis logic 224. The simulated build process executed by the computing device at block 612 includes implementing and simulating modifications to various regions of the component, which includes varying build characteristics and/or structures of the regions such as implementing and/or modifying a lattice structure. Accordingly, for example but without limitation, through a finite element analysis, the modified geometries are simulated such that a determination can be made as to whether the stress of the identified one or more voxels is reduced. Therefore, it can be determined which regions of the component, when modified, reduce the stress of the identified one or more voxels removing deformations, cracks, distortions, surface imperfections such as build lines and/or the like.

At block 614, the computing device executes modification logic 226. That is, the computing device proceeds with modifying the geometry of the identified voxels according to whether the identified voxels are bulk structures or lattice structures. The process of modifying the geometry includes determining that the geometry of the one or more regions comprises a bulk structure or a lattice structure. This determination may be accomplished by computing the percentage of void volume of a voxel. That is, if a percentage of the void volume indicates there is void space within the volumetric portion defined by the voxel, then it may be determined that the voxel includes a lattice structure and if no void space is detected, then the voxel includes a bulk structure. In instances where the geometry corresponds to a bulk structure, the computing device replaces the bulk structure with a first lattice structure configured to modify the value of stress associated with the identified one or more voxels of the component. The first lattice structure may be selected from a library of lattice structures based on a difference between the value of stress associated with the voxel and the threshold value. In instances where the geometry corresponds to the lattice structure, the computing device adjusts a parameter of the lattice structure to modify the value of the stress associated with the identified one or more voxels of the component. The parameters of the lattice structure, for example, include a cell shape, cell size, percentage of volume fraction (e.g., void volume), strut geometry, and/or contour shape. In some embodiments, more than one parameter may be adjusted. In yet further embodiments, a second lattice structure may be selected to replace the existing lattice structure.

While the aforementioned process, that is blocks 602 through 614, are described as a single iteration, in embodiments, the process may be iteratively executed until the values of stress within the component across all the voxels is determined to be below the corresponding one or more threshold values predefined for the component.

Still referring to block 614, the computing device may further select one or more voxels adjacent a select one of the identified voxels having a value of stress greater than a threshold value. Accordingly, the computing device may modify one or more adjacent voxels by implementing a lattice structure therein or optimizing an existing lattice structure.

Once the modifications are made, an updated model incorporating the modification to the geometry are stored in the memory module and/or data storage component at block 616. In embodiments, additional iterations of the optimization may be executed on the update model.

In some embodiments, the computing device is configured to communicate with an AMM 101 and provide a build file to the AMM 101 thereby causing the additive manufacturing system to manufacture the component based on the updated model 102b of the component 103 at block 618. The process described herein is directed to adjusting the internal structures of the component to address distortions, deformations, cracks, and the like arising from building the component using an AMM 101.

At block 620, the computing device may execute validation logic 228. The validation logic is configured to cause the computing device to execute a validation process of the updated model of the component. The validation process includes one or more process for confirming that the component manufactured based on the updated model meets specified design parameters. That is, when the internal structures of a component are adjusted, for example, by implementing a lattice structure therein, the overall properties of the component 103 may change. The validation process confirms that the component 103 manufactured using the updated model 102b will still comply with design specifications and further is capable of being manufactured using AMM 101.

The functional blocks and/or flow diagram elements described herein may be translated onto machine-readable instructions or as a computer program product, which when executed by a computing device, causes the computing device to carry out the functions of the blocks. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

The systems, methods, and computer program products implementing the methods described herein provide capability for improving the inherent strain associated with an additive manufactured component using lattice structures. When stresses in or on a component are too large they can manifest as changes in the physical geometry of the component. For example, surface distortions, geometric deformations, cracks, build lines and the like can result from uncontrolled stress. Additionally, in some cases, stress beyond a threshold value may cause a portion of a part in the process of being built to deform such that a component of the additive manufacturing machine contacts the deformation and causes damage thereto. Accordingly, embodiments described herein provide systems, methods, and computer-program products for optimizing the inherent strain associated with an additively manufactured component by introducing and/or optimizing lattice structures within the additively manufactured component.

Further aspects of the disclosure are provided by the subject matter of the following clauses.

A computer program product comprising a non-transitory computer-readable medium storing instructions, that when executed by a computer processor, cause the computer processor to perform a method. The method comprises obtaining a model defining a geometry of a component for manufacturing using an additive manufacturing system, discretizing the geometry of the component into a plurality of voxels, each voxel representing a volumetric portion of the component, identifying one or more voxels of the plurality of voxels having a value of stress greater than a threshold value, determining one or more regions of the component contributing to the identified one or more voxels having the value of stress greater than the threshold value through a build process simulation configured to iteratively simulate modifications to voxels of the component so that the value of stress of the identified one or more voxels is reduced, modifying the geometry of the one or more regions of the component. The process of modifying the geometry comprises when the geometry corresponds to a bulk structure, replacing the bulk structure with a first lattice structure configured to modify the value of stress associated with the identified one or more voxels of the component and when the geometry corresponds to a lattice structure, adjusting a parameter of the lattice structure to modify the value of stress associated with the identified one or more voxels of the component. The method further comprises storing an updated model of the component incorporating the modifications to the geometry.

The computer program product of any preceding clause, wherein the method further comprises designating at least one voxel of the plurality of voxels as a voxel that cannot be modified.

The computer program product of any preceding clause, wherein the method further comprises selecting the first lattice structure to replace the bulk structure from a library of lattice structures based on a difference between the value of stress associated with the voxel and the threshold value.

The computer program product of any preceding clause, wherein the parameter of the lattice structure adjusted to modify the value of stress comprises at least one of a size, a shape, a percentage volume fraction, or a strut size.

The computer program product of any preceding clause, wherein the method further comprises selecting one or more voxels adjacent to a select one of the identified one or more voxels wherein the value of stress is greater than the threshold value; and modifying the geometry of the volumetric portion of the selected one or more adjacent voxels based on (1) the first lattice structure replacing the bulk structure of the select one of the identified one or more voxels or (2) the parameter of the lattice structure being adjusted in the select one of the identified one or more voxels.

The computer program product of any preceding clause, wherein the method further comprises analyzing stress within the component under a simulated build process executed by the additive manufacturing system to determine the value of stress for each of the plurality of voxels, wherein analyzing stress within the component under the simulated build process executed by the additive manufacturing system further comprises: determining a presence of a distortion in a layer of the component during the simulated build process resulting from stress within the component, wherein the presence of the distortion comprises a protrusion of the component above a build plane; identifying one or more voxels corresponding to the protrusion of the component above the build plane; and modifying the geometry of the volumetric portion of the one or more voxels corresponding to the protrusion by replacing the volumetric portion with a selected lattice structure.

The computer program product of any preceding clause, wherein the method further comprises analyzing stress within the component under a simulated build process executed by the additive manufacturing system to determine the value of stress for each of the plurality of voxels, wherein analyzing stress within the component under the simulated build process executed by the additive manufacturing system further comprises determining a type of stress causing strain associated with the component, and wherein modifying the geometry further comprises: when the geometry corresponds to the bulk structure, selecting the first lattice structure to replace the bulk structure based on the type of stress causing the strain, and when the geometry corresponds to the lattice structure, selecting the parameter of the lattice structure to adjust based on the type of stress causing the strain.

The computer program product of any preceding clause, wherein the method further comprises causing the additive manufacturing system to manufacture the component based on the updated model of the component.

The computer program product of any preceding clause, wherein the method further comprises executing a validation process of the updated model of the component, wherein the validation process comprises confirming that the component manufactured based on the updated model meets specified design parameters.

A method for optimizing an inherent strain associated with an additively manufactured component comprises obtaining a model defining a geometry of a component for manufacturing using an additive manufacturing system; discretizing the geometry of the component into a plurality of voxels, each voxel representing a volumetric portion of the component; identifying one or more voxels of the plurality of voxels having a value of stress greater than a threshold value; determining one or more regions of the component contributing to the identified one or more voxels having the value of stress greater than the threshold value through a build process simulation configured to iteratively simulate modifications to voxels of the component so that the value of stress of the identified one or more voxels is reduced; modifying the geometry of the one or more regions of the component, wherein modifying the geometry comprises: when the geometry corresponds to a bulk structure, replacing the bulk structure with a first lattice structure configured to modify the value of stress associated with the identified one or more voxels of the component, when the geometry corresponds to a lattice structure, adjusting a parameter of the lattice structure to modify the value of stress associated with the identified one or more voxels of the component; and storing an updated model of the component incorporating the modifications to the geometry.

The method of any preceding clause, further comprising designating at least one voxel of the plurality of voxels as a voxel that cannot be modified.

The method of any preceding clause, further comprising selecting the first lattice structure to replace the bulk structure from a library of lattice structures based on a difference between the value of stress associated with the voxel and the threshold value.

The method of any preceding clause, wherein the parameter of the lattice structure adjusted to modify the value of stress comprises at least one of a size, a shape, a percentage volume fraction, or a strut size.

The method of any preceding clause, further comprising: selecting one or more voxels adjacent to a select one of the identified one or more voxels wherein the value of stress is greater than the threshold value; and modifying the geometry of the volumetric portion of the selected one or more adjacent voxels based on (1) the first lattice structure replacing the bulk structure of the select one of the identified one or more voxels or (2) the parameter of the lattice structure being adjusted in the select one of the identified one or more voxels.

The method of any preceding clause, further comprising analyzing stress within the component under a simulated build process executed by the additive manufacturing system to determine the value of stress for each of the plurality of voxels, wherein analyzing stress within the component under the simulated build process executed by the additive manufacturing system further comprises: determining a presence of a distortion in a layer of the component during the simulated build process resulting from stress within the component, wherein the presence of the distortion comprises a protrusion of the component above a build plane; identifying one or more voxels corresponding to the protrusion of the component above the build plane; and modifying the geometry of the volumetric portion of the one or more voxels corresponding to the protrusion by replacing the volumetric portion with a selected lattice structure.

The method of any preceding clause, further comprising analyzing stress within the component under a simulated build process executed by the additive manufacturing system to determine the value of stress for each of the plurality of voxels, wherein: analyzing stress within the component under the simulated build process executed by the additive manufacturing system further comprises determining a type of stress causing strain associated with the component, and wherein modifying the geometry further comprises: when the geometry corresponds to the bulk structure, selecting the first lattice structure to replace the bulk structure based on the type of stress causing the strain, and when the geometry corresponds to the lattice structure, selecting the parameter of the lattice structure to adjust based on the type of stress causing the strain.

The method of any preceding clause, further comprising causing the additive manufacturing system to manufacture the component based on the updated model of the component.

The method of any preceding clause, further comprising executing a validation process of the updated model of the component, wherein the validation process comprises confirming that the component manufactured based on the updated model meets specified design parameters.

An additive manufacturing system comprises an additive manufacturing machine configured to manufacture a part based on a 3D model; and a computing device communicatively coupled to the additive manufacturing machine, wherein the computing device is configured to: obtain the 3D model defining a geometry of a component; discretize the geometry of the component into a plurality of voxels, each voxel representing a volumetric portion of the component; identify one or more voxels of the plurality of voxels having a value of stress greater than a threshold value; determine one or more regions of the component contributing to the identified one or more voxels having the value of stress greater than the threshold value through a build process simulation configured to iteratively simulate modifications to voxels of the component so that the value of stress of the identified one or more voxels is reduced; modify the geometry of the one or more regions of the component, wherein modifying the geometry comprises: when the geometry corresponds to a bulk structure, replace the bulk structure with a first lattice structure configured to modify the value of stress associated with the identified one or more voxels of the component, and when the geometry corresponds to a lattice structure, adjust a parameter of the lattice structure to modify the value of stress associated with the identified one or more voxels of the component; and cause the additive manufacturing machine to manufacture the component based on an updated model of the component, the updated model incorporating modifications to the geometry.

The additive manufacturing system of any preceding clause, wherein the computing device is further configured to select the first lattice structure to replace the bulk structure from a library of lattice structures based on a difference between the value of stress associated with the voxel and the threshold value.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A computer program product comprising a non-transitory computer-readable medium storing instructions, that when executed by a computer processor, cause the computer processor to perform a method comprising:
obtaining a model defining a geometry of a component for manufacturing using an additive manufacturing system;
discretizing the component into a plurality of voxels, each voxel representing a volumetric portion of the component;
identifying one or more voxels of the plurality of voxels having a value of stress greater than a threshold value;
determining one or more regions of the component contributing to the identified one or more voxels having the value of stress greater than the threshold value through a build process simulation configured to iteratively simulate modifications to voxels of the component so that the value of stress of the identified one or more voxels is reduced;
modifying the geometry of the one or more regions of the component, wherein modifying the geometry comprises:
when the geometry corresponds to a bulk structure, replacing the bulk structure with a first lattice structure configured to modify the value of stress associated with the identified one or more voxels of the component, and
when the geometry corresponds to a lattice structure, adjusting a parameter of the lattice structure to modify the value of stress associated with the identified one or more voxels of the component; and
storing an updated model of the component incorporating the modifications to the geometry.

2. The computer program product of claim 1, further comprising designating at least one voxel of the plurality of voxels as a voxel that cannot be modified.

3. The computer program product of claim 1, further comprising selecting the first lattice structure to replace the bulk structure from a library of lattice structures based on a difference between the value of stress associated with the voxel and the threshold value.

4. The computer program product of claim 1, wherein the parameter of the lattice structure adjusted to modify the value of stress comprises at least one of a size, a shape, a percentage volume fraction, or a strut size.

5. The computer program product of claim 1, further comprising:
selecting one or more voxels adj acent to a select one of the identified one or more voxels wherein the value of stress is greater than the threshold value; and
modifying the geometry of the volumetric portion of the selected one or more adjacent voxels based on the first lattice structure replacing the bulk structure of the select one of the identified one or more voxels or the parameter of the lattice structure adjusted in the select one of the identified one or more voxels.

6. The computer program product of claim 1, further comprising analyzing stress within the component under a simulated build process executed by the additive manufacturing system to determine the value of stress for each of the plurality of voxels, wherein analyzing stress within the component under the simulated build process executed by the additive manufacturing system further comprises:
determining a presence of a distortion in a layer of the component during the simulated build process resulting from stress within the component, wherein the presence of the distortion comprises a protrusion of the component above a build plane;
identifying one or more voxels corresponding to the protrusion of the component above the build plane; and
modifying the geometry of the volumetric portion of the one or more voxels corresponding to the protrusion with a selected lattice structure configured to remove the protrusion from the layer during a build process.

7. The computer program product of claim 1, further comprising analyzing stress within the component under a simulated build process executed by the additive manufacturing system to determine the value of stress for each of the plurality of voxels, wherein analyzing stress within the component under the simulated build process executed by the additive manufacturing system further comprises determining a type of stress causing strain associated with the component, and wherein
modifying the geometry further comprises:
when the geometry corresponds to the bulk structure, selecting the first lattice structure to replace the bulk structure based on the type of stress causing the strain, and
when the geometry corresponds to the lattice structure, selecting the parameter of the lattice structure to adjust based on the type of stress causing the strain.

8. The computer program product of claim 1, further comprising causing the additive manufacturing system to manufacture the component based on the updated model of the component.

9. The computer program product of claim 1, further comprising executing a validation process of the updated model of the component, wherein the validation process comprises confirming that the component manufactured based on the updated model meets specified design parameters.

10. A method for optimizing an inherent strain associated with an additively manufactured component, the method comprising
obtaining a model defining a geometry of a component for manufacturing using an additive manufacturing system;
discretizing the component into a plurality of voxels, each voxel representing a volumetric portion of the component;
identifying one or more voxels of the plurality of voxels having a value of stress greater than a threshold value;
determining one or more regions of the component contributing to the identified one or more voxels having the value of stress greater than the threshold value through a build process simulation configured to iteratively simulate modifications to voxels of the component so that the value of stress of the identified one or more voxels is reduced;
modifying the geometry of the one or more regions of the component, wherein modifying the geometry comprises:
when the geometry corresponds to a bulk structure, replacing the bulk structure with a first lattice structure configured to modify the value of stress associated with the identified one or more voxels of the component, and
when the geometry corresponds to a lattice structure, adjusting a parameter of the lattice structure to modify the value of stress associated with the identified one or more voxels of the component; and
storing an updated model of the component incorporating the modifications to the geometry.

11. The method of claim 10, further comprising designating at least one voxel of the plurality of voxels as a voxel that cannot be modified.

12. The method of claim 10, further comprising:
selecting one or more voxels adj acent to a select one of the identified one or more voxels wherein the value of stress is greater than the threshold value; and
modifying the geometry of the volumetric portion of the selected one or more adjacent voxels based on the first lattice structure replacing the bulk structure of the select one of the identified one or more voxels or the parameter of the lattice structure adjusted in the select one of the identified one or more voxels.

13. The method of claim 10, further comprising analyzing stress within the component under a simulated build process executed by the additive manufacturing system to determine the value of stress for each of the plurality of voxels, wherein analyzing stress within the component under the simulated build process executed by the additive manufacturing system further comprises:
determining a presence of a distortion in a layer of the component during the simulated build process resulting from stress within the component, wherein the presence of the distortion comprises a protrusion of the component above a build plane;
identifying one or more voxels corresponding to the protrusion of the component above the build plane; and
modifying the geometry of the volumetric portion of the one or more voxels corresponding to the protrusion with a selected lattice structure configured to remove the protrusion from the layer during a build process.

14. The method of claim 10, further comprising analyzing stress within the component under a simulated build process executed by the additive manufacturing system to determine the value of stress for each of the plurality of voxels, wherein: analyzing stress within the component under the simulated build process executed by the additive manufacturing system further comprises determining a type of stress causing strain associated with the component, and wherein
modifying the geometry further comprises:
when the geometry corresponds to the bulk structure, selecting the first lattice structure to replace the bulk structure based on the type of stress causing the strain, and
when the geometry corresponds to the lattice structure, selecting the parameter of the lattice structure to adjust based on the type of stress causing the strain.

15. An additive manufacturing system comprising:
an additive manufacturing machine configured to manufacture a part based on a 3D model; and
a computing device communicatively coupled to the additive manufacturing machine, wherein the computing device is configured to:
obtain the 3D model defining a geometry of a component;
discretize the component into a plurality of voxels, each voxel representing a volumetric portion of the component;
identify one or more voxels of the plurality of voxels having a value of stress greater than a threshold value;
determine one or more regions of the component contributing to the identified one or more voxels having the value of stress greater than the threshold value through a build process simulation configured to iteratively simulate modifications to voxels of the component so that the value of stress of the identified one or more voxels is reduced;
modify the geometry of the one or more regions of the component, wherein modifying the geometry comprises:
when the geometry corresponds to a bulk structure, replace the bulk structure with a first lattice structure configured to modify the value of stress associated with the identified one or more voxels of the component, and
when the geometry corresponds to a lattice structure, adjust a parameter of the lattice structure to modify the value of stress associated with the identified one or more voxels of the component; and
cause the additive manufacturing machine to manufacture the component based on an updated model of the component, the updated model incorporating modifications to the geometry.
